# EUROPEAN PATENT SPECIFICATION

(11) **EP 2 977 170 B1**
(45) Date of publication and mention of the grant of the patent: **12.07.2017**
(21) Application number: 13879047.2
(22) Date of filing: 28.04.2013
(51) Int. Cl.: B29C 49/56, B29L 22/00, B29C 49/36, B29C 49/48, B29C 49/64

(54) **LINKAGE MECHANISM BETWEEN BOTTOM DIE LIFTING AND UNILATERAL CLAMPING**
VERBINDUNGSMECHANISMUS ZWISCHEN UNTERGESENKANHEBUNG UND EINSEITIGEM KLEMMEN
MÉCANISME DE LIAISON ENTRE UN LEVAGE DE MATRICE INFÉRIEURE ET UN SERRAGE UNILATÉRAL

(30) Priority: 19.03.2013 CN 201310088983
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); CAI, Zhiyi, Zhangjiagang Jiangsu 215624 (CN); CHU, Xingan, Zhangjiagang Jiangsu 215624 (CN); HE, Deping, Zhangjiagang Jiangsu 215624 (CN)
(74) Representative: Office Kirkpatrick
(86) International application number: PCT/CN2013/074944
(87) International publication number: WO 2014/146325

(56) References cited:
- EP-A2- 2 422 955
- CN-A- 102 205 626
- CN-A- 102 765 186
- CN-A- 102 862 285
- CN-A- 102 962 989
- CN-U- 203 157 121
- GB-A- 1 040 882
- US-A1- 2006 093 699
- US-A1- 2010 203 185

## Description

### Field of the Invention

The present invention relates to the field of a processing device for a beverage bottle, and more particularly to an elevating and locking mechanism for a bottom mould of a bottle blowing machine.

### Description of the Related Art

A bottle blowing machine of the prior art generally comprises a machine frame, a left mould, a right mould and a bottom mould which are disposed on the machine frame, as well as a driving mechanism and a positioning mechanism.

Related bottom mould locking mechanism are described in EP-A-2422955 and US2010/203125.

A bottom mould locking mechanism of a linear bottle blowing machine, as disclosed in patent publication No. CN201755911U, comprises a mould mounting plate, a bottle mould, a bottom mould, an actuating mechansim, a positioning mechanism and a supporting seat. The end of the cavity of the bottle mould is sleeved with the bottom mould which is connected with the actuating mechanism. The positioning mechanism is horizontally disposed on the support seat and comprises a positioning block air cylinder and a positioning block connected with each other. The actuating mechanism comprises a bottom mould mounting plate and a bottom mould elevating air cylinder. An upper surface of the bottom mould mounting plate is connected with the bottom mould, and a lower surface of the bottom mould mounting plate is connected with the bottom mould elevating air cylinder which is mounted on a support frame. From this, three driving mechanisms are required in the bottom mould locking mechanism of the above patent, and this will increase the energy consumption and make the whole device bulky.

### Summary of the Invention

A technical problem to be solved by the invention is to provide an improved elevating and unilateral locking linkage for a bottom mould.

In order to overcome the above technical problem, the following technical solution is utilized in the invention.

An elevating and unilateral locking linkage for a bottom mould, mounted on a bottle blowing machine, the linkage comprises a bottom mould elevating assembly and a positioning assembly, the bottom mould elevating assembly comprises an elevating rod movably disposed on a machine frame of the bottle blowing machine in up-down direction, the bottom mould is mounted on an upper end of the elevating rod, the elevating rod is driven by a driving assembly to move. The driving assembly comprises: a rotation shaft rotatably disposed on the machine frame around a first axis; a cam fixedly connected on the rotation shaft, a first sliding groove is opened on the cam; a sliding part mounted on the elevating rod, the sliding part is slidably inserted into the first sliding groove; and a power source for driving the rotation of the rotation shaft. In the course of rotation of the rotation shaft, the contact position of the first sliding groove with the sliding part rises or descends, the sliding part moves in up-down direction under the guiding of the first sliding groove. The positioning assembly comprises a sliding block slidably disposed on the machine frame, a swing member swingably disposed on the machine frame around a second axis for driving the movement of the sliding block during it's swinging; and a rotation member fixedly disposed on the rotation shaft for controlling the swinging of the swing member. The linkage has at least two working positions, in the first working position, there is a certain distance between the bottom mould and the machine frame and sliding block is inserted between the bottom mould and the machine frame and contacts against the bottom mould, in the second working position, the sliding block is separated from the bottom mould, such that the bottom mould moves towards the machine frame. While the driving assembly drives the elevating rod to drive the elevating of the bottom mould, the rotation shaft drives the rotation of the rotation member, so that the swing member drives the movement of the sliding block to position or release the bottom mould. From this, the linkage of the bottom mould elevating and positioning is reached.

Preferably, the driving assembly also comprises a swing arm for connecting the rotation shaft with the power source. The power source drives the rotation of the swing arm , and further drives the rotation of the rotation shaft by the swing arm. The swing arm, the cam and the sliding part are located below the machine frame. Thus, the power source also can be arranged below the machine frame to effectively utilize the space below the machine frame.

More preferably, a first through-hole for the rotation shaft extending through therein and a second through-hole for the elevating rod extending through therein respectively are opened on the machine frame, such that the rotation shaft and the elevating rod can extend partially above the machine frame and extend partially below the machine frame.

Still more preferably, the rotation member, the swing member, the sliding block and the bottom mould are located above an upper surface of the machine frame.

In a specific embodiment, the rotation member has a guiding surface thereon and a projection is formed on the swing member, the projection slidably contacts with the guiding surface, and the distance between the contact position of projection with the guiding surface and the first axis changes with the rotation of the rotation member. With the rotation of the rotation member, the projection moves under the guiding of the guiding surface, such that the swing member swings around the second axis. Preferably, a linear guide rail is formed on the machine frame, and the sliding block is slidably disposed on the guide rail.

Preferably, a convex column is formed on the sliding block, a second sliding groove is opened on the swing member at a distance from the second axis, and the convex column is slidably inserted into the second sliding groove. The portion of the swing member where the second sliding groove is opened forms a transmission fork configuration, the sliding block is driven by the transmission fork to slide relative to the machine frame, thereby achieving a simple and easy ways.

Preferably, an elastic member is arranged between the swing member and the machine frame for providing a restoring force for the swing member. In the course of rotation of the rotation member, when the contact position of the projection with the guiding surface gets farther and farther away from the first axis, the swing member is pushed by the rotation member to swing. Otherwise, in the course of rotation of the rotation member, when the contact position of the projection with the guiding surface gets nearer and nearer to the second axis, an external force is required to drive the swing member to swing, and the elastic member is used for providing such an external force. Certainly, the external force can be provided in other ways, for example, the swing member is driven by the rotation member.

Preferably, the firs axis is parallel to the second axis.

Due to the above technical solution, the present invention has the following advantages as compared with the prior art: the linkage of the positioning assembly and the elevating assembly is driven by one rotation shaft, that is to say, two kinds of operations are achieved by means of a power source, this can save energy and reduce the volume of the whole device.

### Brief Description of the Drawings

Fig.1 is a schematic drawing showing an elevating and unilateral locking linkage for a bottom mould according to the invention;
Fig.2 is top view of the fig.1, wherein the bottom mould descends;
Fig.3 is top view of the fig.2 when the bottom mould is positioned, wherein the bottom mould rises;
wherein: 1. a bottom mould; 2. a machine frame; 3. a positioning assembly; 4. a driving assembly; 5. a rotation shaft; 6. a cam; 7. a rotation member; 8. a first sliding groove; 9. a swing arm; 12. an elevating rod; 13. a sliding part; 31. a sliding block; 33. a guide rail; 35. a swing member; 37. a projection; 38. a torsional spring; 41. a convex column; 42. a second groove; 71. a guiding surface.

### Description of the Preferred Embodiments

The present invention will be described hereinafter with reference to the accompanying drawings. It is to be noted, however, that the drawings are given only for illustrative purpose and therefore not to be considered as limiting of its scope, for the invention may admit to other equally effective embodiments.

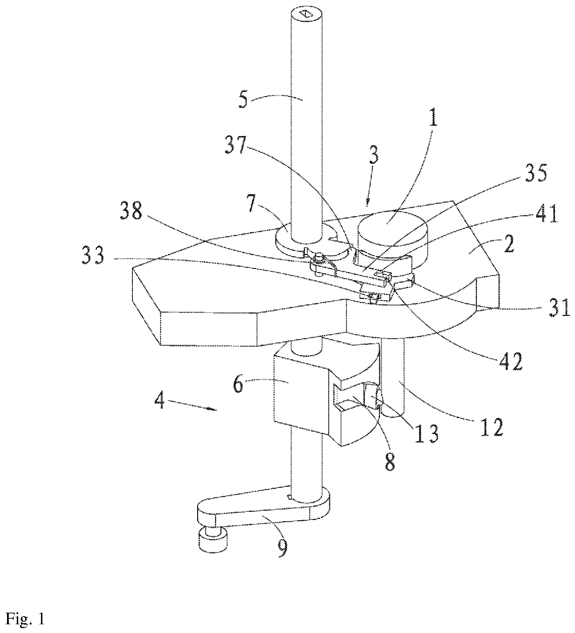

Fig.1 generally shows the structure of the bottom mould elevating assembly and the positioning assembly, these assemblies are mounted on a bottle blowing machine for use. The other parts of the bottle blowing machine are not involved by the main technical points of the invention and are well known by one skilled in the art, and thus not shown in fig.s. The mechanism shown in fig.1 comprises a machine frame 2, a bottom mould positioning assembly 3, a driving assembly 4 for driving the elevating of the bottom mould. Generally the machine frame is provided with a mould blowing assembly (a commonly used mechanism, not illustrated fully). The mould blowing assembly comprises a left mould and a right mould which can be closed or opened, and a bottom mould slidably disposed on the machine frame in up-down direction. When the mould is closed, the left and right moulds engage with each other and the bottom mould draws close to the left and right moulds, such that the three moulds together enclose to provide a cavity. When the mould is opened, the three moulds are separated to open the cavity.

As shown in fig.s, the driving assembly 4 comprises a rotation shaft 5 rotatably disposed on the machine frame 2 around it's own axis, a cam 6 fixedly connected with the lower portion of the rotation shaft 5, and a power source for driving the rotation of the rotation shaft 5, a first sliding groove 8 is opened on the cam 6. The driving assembly 4 also comprises a swing arm 9 for connecting the rotation shaft 5 with the power source.

The bottom mould 1 is disposed on the upper end of an elevating rod 12, and a sliding part 13 slidable along the first guiding groove 8 is provided on the lower portion of the elevating rod 12, as shown in fig.1 The bottom mould 1, the elevating rod 2 and the sliding part 13 can be integrated as one piece.

In the course of rotation of the rotation shaft 5, the first sliding groove 8 contacts and supports the sliding part 13, with the support position of first sliding groove 8 rising or descending, , the sliding part 13 moves in up-down direction under the guiding of the first sliding groove 8. Correspondingly, the elevating rod 2 drives the elevating of the bottom mould 1.

In the preferable embodiment shown in fig.1, the axis of rotation of the rotation shaft 5 is parallel to the direction of movement of the elevating rod 12 relative to the machine frame 2. The guiding groove 8 inclinedly extends relative to the plane perpendicular to the axis of rotation. Herein, the term "inclinedly" means that the central axis of the first sliding groove 8 representing the extending direction of the guiding groove 8 is not in the same circumference of the cross-section of the rotation shaft 5. The extending direction of the first sliding groove 8 is neither parallel to the axis of rotation of the rotation shaft 5, nor vertical to the axis of rotation. In this case, in the course of rotation of the rotation shaft 5, the sliding part 13 slidably cooperating with the first sliding groove 8 moves in up-down direction under the guiding of the guiding groove 4.

Fig.s 2-3 illustrate more intuitively the configuration of the positioning assembly 3.

The positioning assembly 3 comprises a rotation member 7 fixedly disposed on the rotation shaft 5, a swing member 35 cooperating with the rotation member 7 and a sliding block 31 slidable in the horizontal direction. One end of the swing member 35 is rotatably connected with the machine frame 2, and the other end is connected with the sliding block 31.

Specifically, the rotation member 7 has a guiding surface 71 thereon and a projection 37 is formed on the swing member 35, in the course of rotation of the rotation member 7, the projection 37 slidably contacts with the guiding surface 71. The guiding surface 71 can be configured as an evolvent-shaped structure. The distance between the outer edge of the cross-section of the guiding surface 71 along the line where the radius of the rotation shaft is and the shaft axis of the rotation shaft 5 becomes bigger and bigger or smaller and smaller clockwise. Certainly, the guiding surface 71 also can be configured as other curved configurations. The guiding surface 71 is formed such that the distance between the shaft axis of the rotation shaft 5 and the contact position of the projection 37 with the guiding surface 71 changes with the rotation of the rotation member 7, thereby leading to the swinging of the swing member 35.

The positioning assembly 3 also comprises a guide rail 33 disposed along the horizontal direction, and the sliding block 31 is slidably disposed along the guide rail 33.

A convex column 41 is formed on the sliding block 31, and a second sliding groove 42 is formed on the swing member 35, the convex column 41 is slidably inserted into the second sliding groove 42. The portion of the swing member 35 where the second sliding groove 42 is opened forms a transmission fork configuration for driving the sliding of the sliding block 31 on the guide rail 33.

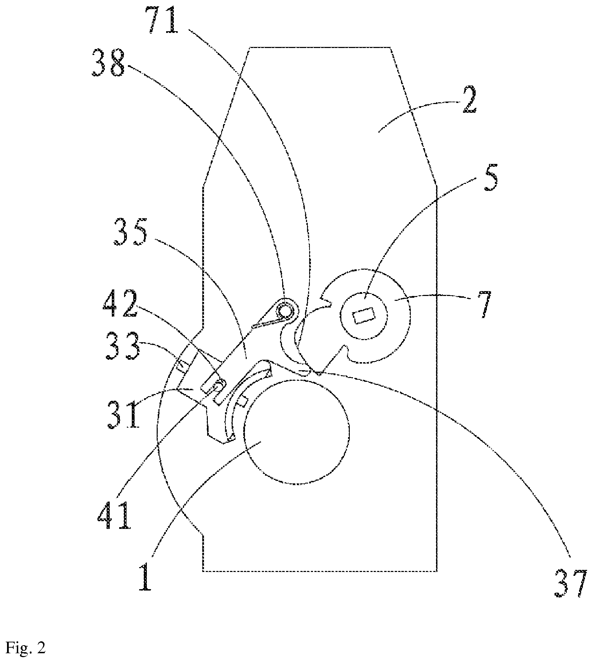

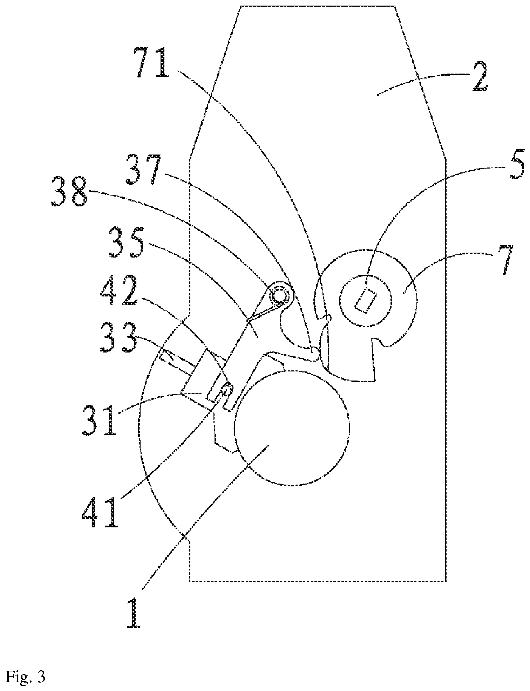

Preferably, a torsional spring 38 is arranged between the swing member 35 and the machine frame 2 for providing a restoring force for the swing member 35. Referring to the conversion from fig.2 to fig.3, the rotation member 7 rotates anticlockwise, due to the guiding effect of the guiding surface 71, the projection 37 contacting with it moves towards the shaft axis of the rotation shaft 5 (namely, the axis of rotation of the rotation shaft 5 relative to the machine frame 2), at this time, the swing member 35 rotates anticlockwise under the acting force of the swing member 35, and the transmission fork portion drives the sliding block 31 to move along the guide rail 33 into the position shown in fig.3, that is to say, the sliding block 31 is inserted between the bottom mould 1 and the machine frame 2 and contacts the bottom mould 1 to position the bottom mould 1. Again referring to the conversion from fig.3 to fig.2, the rotation member 7 rotates clockwise, the contact position of the guiding surface 71 with the projection 37 is farther and farther from the shaft axis of the rotation shaft 5, and thus the projection 37 is pushed to move, in this course, the swing member 35 overcomes the acting force of the torsional spring 38 to rotates clockwise, and drives the sliding block 31 to move into the position shown in fig.2 by the transmission fork portion, namely, the sliding block 31 is detached from the bottom mould 1 and the bottom mould 1 is released. When the mould blowing assembly is in the mould closing state, the bottom mould 1 rises such that it is spaced apart from the machine frame 2, the sliding block 31 is inserted between the bottom mould 1 and the machine frame 2 and contacts against the bottom mould 1 below the bottom mould 1. When the bottom blowing assembly is in the mould opening state, the power source drives the rotation shaft 5 to rotate, and the rotation shaft 5 drives the rotation of the cam 6 and the rotation member 7. When the rotation member 7 rotates, the projection 37 slides along the guiding surface 71 such that the swing member 35 swings, the sliding block 31 is driven by the the swing member 35 to slide along the guide rail 33, then the positioning assembly 3 is opened and the cam 6 rotates with the rotation shaft 5. The sliding part 13 slides along the f irst sliding groove 8 such that the bottom mould descends and the mould opening is reached.

## Claims

1. An elevating and unilateral locking linkage for a bottom mould (1), mounted on a bottle blowing machine, the linkage comprising a bottom mould elevating assembly and a positioning assembly (3), the bottom mould elevating assembly comprising an elevating rod (12) movably disposed on a machine frame (2) of the bottle blowing machine in up-down direction, the bottom mould (1) being mounted on an upper end of the elevating rod (12), the elevating rod (12) being driven by a driving assembly (4) to move in up-down direction,
the driving assembly(4) comprising:
a rotation shaft (5) rotatably disposed on the machine frame (2) around a first axis;
a cam (6) fixedly connected on the rotation shaft (5), a first sliding groove (8) being opened on the cam (6);
a sliding part (13) mounted on the elevating rod (12), the sliding part (13) being slidably inserted into the first sliding groove (8); and
a power source for driving the rotation of the rotation shaft (5);
in the course of rotation of the rotation shaft (5), the contact position of the first sliding groove (8) with the sliding part (13) rises or descends, the sliding part (13) moves in up-down direction under the guiding of the first sliding groove (8);
and
the positioning assembly (3) comprising:
a sliding block (31) slidably disposed on the machine frame (2);
a swing member (35) swingably disposed on the machine frame (2) around a second axis, for driving the movement of the sliding block (31) during it's swinging; and
a rotation member (7) fixedly disposed on the rotation shaft (5) for controlling the swinging of the swing member (35);
wherein the linkage has at least two working positions, in the first working position , there is a certain distance between the bottom mould (1) and the machine frame (2), and sliding block (31) is inserted between the bottom mould (1) and the machine frame (2) and contacts against the bottom mould (1), in the second working position, the sliding block (31) is separated from the bottom mould (1), such that the bottom mould (1) moves towards the machine frame (2).

2. The linkage according to claim 1, **characterized in that** the driving assembly (4) also comprises a swing arm (9) for connecting the rotation shaft (5) with the power source, the swing arm (9), the cam (6) and the sliding part (13) being located below the machine frame (2).

3. The linkage as according to claim 2, **characterized in that** a first through-hole for the rotation shaft (5) extending through therein and a second through-hole for the elevating rod (12) extending through therein respectively are opened on the machine frame (2).

4. The linkage according to anyone of claims 1- to 3, **characterized in that** the rotation member (7), the swing member (35), the sliding block (31) and the bottom mould (1) are located above an upper surface of the machine frame (2).

5. The linkage according to claim 1, **characterized in that** the rotation member (7) has a guiding surface (71) thereon and a projection (37) is formed on the swing member (35), the projection (37) slidably contacting with the guiding surface (71), and the distance between the contact position of the projection (37) with the guiding surface (71) and the first axis changing with the rotation of the rotation member (7).

6. The linkage according to claim 1 or 5, **characterized in that** an elastic member is arranged between the swing member (35) and the machine frame (2) for providing a restoring force for the swing member (35).

7. The linkage according to claim 1, **characterized in that** a linear guide rail (33) is formed on the machine frame (2), the sliding block (31) being slidably disposed on the guide rail (33).

8. The linkage according to claim 1 or 7, **characterized in that** a convex column (41) is formed on the sliding block (31), a second sliding groove (42) is opened on the swing member (35) at a distance from the second axis, the convex column (41) being slidably inserted into the second sliding groove (42).

9. The linkage according to anyone of claims 1- to 3 and 5, **characterized in that** the first axis is parallel to the second axis.

## Patentansprüche

1. Hebende und einseitige Verriegelungsverbindung für eine Bodenform (1), die auf einer Flaschenblasmaschine montiert ist, wobei die Verbindung eine Hebeanordnung für eine Bodenform und eine Positionieranordnung (3) umfasst, die Hebeanordnung für die Bodenform eine Hebestange (12) umfasst, die beweglich auf einem Maschinenrahmen (2) der Flaschenblasmaschine in Aufwärts-Abwärts-Richtung angeordnet ist, die Bodenform (1) auf einem oberen Ende der Hebestange (12) montiert ist, die Hebestange (12) von einer Antriebsanordnung (4) zur Bewegung in Aufwärts-Abwärts-Richtung angetrieben wird,
die Antriebsanordnung (4) umfassend:
eine Rotationswelle (5), die drehbar auf dem Maschinenrahmen (2) um eine erste Achse herum angeordnet ist;
einen Nocken (6), der fest mit der Rotationswelle (5) verbunden ist, eine erste Gleitnut (8), die auf dem Nocken (6) geöffnet ist;
ein Gleitteil (13), das an der Hebestange (12) montiert ist, wobei das Gleitteil (13) gleitend in die erste Gleitnut (8) eingelassen ist; und
eine Stromquelle zum Antreiben der Drehung der Rotationswelle (5);
im Laufe der Drehung der Rotationswelle (5) steigt oder sinkt die Kontaktposition der ersten Gleitnut (8) mit dem Gleitteil (13), das Gleitteil (13) bewegt sich in Aufwärts-Abwärts-Richtung unter der Führung der ersten Gleitnut (8);
und
die Positionieranordnung (3) umfassend:
einen Gleitblock (31), der gleitend auf dem Maschinenrahmen (2) angeordnet ist;
ein Schwingelement (35), das schwingend auf dem Maschinenrahmen (2) um eine zweite Achse herum angeordnet ist, um die Bewegung des Gleitblocks (31) während dessen Schwingen anzutreiben; und
ein Rotationselement (7), das fest auf der Rotationswelle (5) zur Steuerung des Schwingens des Schwingelements (35) angeordnet ist;
wobei die Verbindung mindestens zwei Arbeitspositionen aufweist, in der ersten Arbeitsposition ist ein gewisser Abstand zwischen der Bodenform (1) und dem Maschinenrahmen (2) vorhanden und ein Gleitblock (31) zwischen der Bodenform (1) und dem Maschinenrahmen(2) eingelassen und berührt die Bodenform (1), in der zweiten Arbeitsposition ist der Gleitblock (31) von der Bodenform (1) getrennt, sodass die Bodenform (1) sich zu dem Maschinenrahmen (2) hin bewegt.

2. Verbindung nach Anspruch 1, **dadurch gekennzeichnet, dass** die Antriebsanordnung (4) ebenfalls einen Schwenkarm (9) zur Verbindung der Rotationswelle (5) mit der Stromquelle, dem Schwenkarm (9) dem Nocken (6) und dem Gleitteil (13), das sich unter dem Maschinenrahmen (2) befindet, umfasst.

3. Verbindung nach Anspruch 2, **dadurch gekennzeichnet, dass** ein erstes Durchgangsloch für die Rotationswelle (5), sich darin erstreckt, und ein zweites Durchgangsloch für die Hebestange (12), die sich darin erstreckt, jeweils auf dem Maschinenrahmen (2) geöffnet sind.

4. Verbindung nach einem der Ansprüche 1 bis 3, **dadurch gekennzeichnet, dass** das Rotationselement (7), das Schwenkelement (35), der Gleitblock (31) und die Bodenform (1) sich oberhalb einer oberen Fläche des Maschinenrahmens (2) befinden.

5. Verbindung nach Anspruch 1, **dadurch gekennzeichnet, dass** das Rotationselement (7) eine Führungsfläche (71) darauf aufweist und ein Vorsprung (37) auf dem Schwenkelement (35) ausgebildet ist, wobei der Vorsprung (37) gleitend die Führungsfläche (71) berührt und der Abstand zwischen der Kontaktposition des Vorsprungs (37) mit der Führungsfläche (71) und der ersten Achse sich mit der Drehung des Rotationselements (7) verändert.

6. Verbindung nach Anspruch 1 oder 5, **dadurch gekennzeichnet, dass** ein elastisches Element zwischen dem Schwenkelement (35) und dem Maschinenrahmen (2) zum Bereitstellen einer Rückstellkraft für das Schwenkelement (35) angeordnet ist.

7. Verbindung nach Anspruch 1, **dadurch gekennzeichnet, dass** eine lineare Führungsschiene (33) auf dem Maschinenrahmen (2) ausgebildet ist, wobei der Gleitblock (31) gleitend auf der Führungsschiene (33) angeordnet ist.

8. Verbindung nach Anspruch 1 oder 7, **dadurch gekennzeichnet, dass** eine konvexe Säule (41) auf dem Gleitblock (31) ausgebildet ist, eine zweite Gleitnut (42) auf dem Schwenkelement (35) in einem Abstand von der zweiten Achse geöffnet ist, wobei die konvexe Säule (41) gleitend in die zweite Gleitnut (42) eingelassen ist.

9. Verbindung nach einem der Ansprüche 1 bis 3 und 5, **dadurch gekennzeichnet, dass** die erste Achse parallel zur zweiten Achse verläuft.

## Revendications

1. Liaison élévatrice avec verrouillage unilatéral pour un moule inférieur (1), montée sur une machine de soufflage de bouteilles, la liaison comprenant un montage élévateur pour moule inférieur et un montage de positionnement (3), le montage élévateur pour moule inférieur comprenant une tige élévatrice (12) disposée de façon mobile sur un cadre de machine (2) de la machine de soufflage de bouteilles dans une direction haut-bas, le moule inférieur (1) étant monté sur une extrémité supérieure de la tige élévatrice (12), la tige élévatrice (12) étant actionnée par un montage actionneur (4) pour se déplacer dans la direction haut-bas, le montage actionneur (4) comprenant :
un arbre de rotation (5) disposé de façon rotative sur le cadre de machine (2) autour d'un premier axe ;
une came (6) raccordée de façon fixe sur l'arbre de rotation (5), une première rainure coulissante (8) étant ouverte sur la came (6) ;
une partie coulissante (13) montée sur la tige élévatrice (12), la partie coulissante (13) étant insérée de façon coulissante dans la première rainure coulissante (8) ; et
une source d'alimentation pour actionner la rotation de l'arbre de rotation (5) ;
pendant la rotation de l'arbre de rotation (5), la position de contact de la première rainure coulissante (8) avec la partie coulissante (13) monte ou descend, la partie coulissante (13) se déplace dans la direction haut-bas guidée par la première rainure coulissante (8) ; et
le montage de positionnement (3) comprenant :
un bloc coulissant (31) disposé de façon coulissante sur le cadre de machine (2) ;
un élément de balancement (35) disposé de façon oscillante sur le cadre de machine (2) autour d'un deuxième axe, pour actionner le mouvement du bloc coulissant (31) pendant son balancement ; et
un élément de rotation (7) disposé de façon fixe sur l'arbre de rotation (5) pour contrôler le balancement de l'élément de balancement (35) ;
la liaison ayant au moins deux positions de travail ; dans la première position de travail, il y a une certaine distance entre le moule inférieur (1) et le cadre de machine (2), et un bloc coulissant (31) est inséré entre le moule inférieur (1) et le cadre de machine (2) et entre en contact avec le moule inférieur (1) ; dans la seconde position de travail, le bloc coulissant (31) est séparé du moule inférieur (1) de sorte que le moule inférieur (1) se déplace vers le cadre de machine (2).

2. Liaison selon la revendication 1, **caractérisée en ce que** le montage actionneur (4) comprend également un bras oscillant (9) destiné à raccorder l'arbre de rotation (5) à la source d'alimentation, le bras oscillant (9), la came (6) et la partie coulissante (13) étant situés sous le cadre de machine (2).

3. Liaison selon la revendication 2, **caractérisée en ce qu'**un premier orifice traversant pour l'arbre de rotation (5) s'étendant à travers, et un second orifice traversant pour la tige élévatrice (12) s'étendant à travers sont respectivement ouverts sur le cadre de machine (2).

4. Liaison selon l'une quelconque des revendications 1 à 3, **caractérisée en ce que** l'élément de rotation (7), l'élément de balancement (35), le bloc coulissant (31) et le moule inférieur (1) sont situés au-dessus d'une surface supérieure du cadre de machine (2).

5. Liaison selon la revendication 1, **caractérisée en ce que** l'élément de rotation (7) comporte une surface de guidage (71) dessus et **en ce qu'**une projection (37) est formée sur l'élément de balancement (35), la projection (37) étant en contact de façon coulissante avec la surface de guidage (71), et la distance entre la position de contact de la projection (37) avec la surface de guidage (71) et le premier axe changeant avec la rotation de l'élément de rotation (7).

6. Liaison selon la revendication 1 ou 5, **caractérisée en ce qu'**un élément élastique est disposé entre l'élément de balancement (35) et le cadre de machine (2) pour fournir une force de rappel à l'élément de balancement (35).

7. Liaison selon la revendication 1, **caractérisée en ce qu'**un rail de guidage linéaire (33) est formé sur le cadre de machine (2), le bloc coulissant (31) disposé de façon coulissante sur le rail de guidage (33).

8. Liaison selon la revendication 1 ou 7, **caractérisée en ce qu'**une colonne convexe (41) est formée sur le bloc coulissant (31), une deuxième rainure coulissante (42) est ouverte sur l'élément de balancement (35) à une certaine distance du deuxième axe, la colonne convexe (41) étant insérée de façon coulissante dans la deuxième rainure coulissante (42).

9. Liaison selon l'une quelconque des revendications 1 à 3 et 5, **caractérisée en ce que** le premier axe est parallèle au deuxième axe.
